# DEMANDE DE BREVET EUROPEEN

(11) **EP 3 197 140 A1**
(43) Date de publication de la demande: **26.07.2017**
(21) Numéro de dépôt: 17151816.0
(22) Date de dépôt: 17.01.2017
(51) Int. Cl.: H04M 11/06, H04M 11/02

(54) **PORTIER VIDEO AVEC FONCTION AUTODIAGNOSTIC ET AUTOPROTECTION**

(30) Priorité: 20.01.2016 FR 1650445
(71) Demandeur: AVIDSEN, 37170 Chambray les Tours (FR)
(72) Inventeur: HOANG, Minh-Hoa, 37320 ESVRES SUR INDRE (FR)
(74) Mandataire: Ipside

(57) **Abrégé**

La présente invention se rapporte à un dispositif (10) de type interphone, comportant une platine (11) de rue placée à l'extérieur d'un domicile, un moniteur (12) placé à l'intérieur dudit domicile et un support (13) pour ledit moniteur (12), caractérisé en ce que ledit support (13) comporte une pluralité de témoins (14, 15, 16, 17) lumineux correspondant chacun à une panne particulière.

## Description

### Domaine de l'invention

La présente invention se rapporte au domaine des dispositifs de type interphone, fournissant une interface de communication entre l'extérieur d'un domicile et l'intérieur dudit domicile.

La présente invention concerne plus particulièrement un interphone, de préférence comportant des moyens de transmission vidéo en couleur, comportant une pluralité de témoins lumineux.

### Etat de la technique

On connaît dans l'état de la technique de nombreux appareils offrant les fonctionnalités d'un interphone, c'est-à-dire permettant une communication entre l'extérieur et l'intérieur d'un domicile.

Toutefois, ces dispositifs de l'état de la technique possèdent l'inconvénient suivant : les branchements sont complexes et les installateurs rencontrent souvent des difficultés dans les connexions, ce qui peut occasionner des dommages auxdits dispositifs.

### Exposé de l'invention

La présente invention entend remédier aux inconvénients de l'art antérieur en proposant un dispositif de type interphone permettant de simplifier l'installation de l'interphone pour la personne qui installe le matériel et de protéger le matériel.

A cet effet, la présente invention concerne, dans son acception la plus générale, un dispositif de type interphone, comportant une platine de rue placée à l'extérieur d'un domicile, un moniteur placé à l'intérieur dudit domicile et un support pour ledit moniteur, caractérisé en ce que ledit support comporte une pluralité de témoins lumineux correspondant chacun à une panne particulière.

Ainsi, grâce à la présente invention, il est possible de faire fonctionner le dispositif de manière efficace lors d'une installation, ceci sans occasionner de dommages audit dispositif. Grâce au dispositif selon la présente invention, une erreur de connexion est signalée à l'installateur, de manière à ce qu'il puisse résoudre le problème simplement et de manière efficace.

Le dispositif selon la présente invention permet de simplifier l'installation de l'interphone pour la personne qui installe le matériel : toute omission/erreur de câblage est signalée par le biais de témoins en façade du support pour aiguiller l'installateur. Une fois l'installation et le câblage diagnostiqués comme corrects, l'installateur n'a plus qu'à poser le moniteur dans le support pour pouvoir installer son interphone.

La présente invention permet également de protéger le matériel : les erreurs ou omissions signalées ne sont pas destructives pour le matériel. La technologie utilisée autorise les erreurs et empêche tout dommage irrémédiable du produit lors de sa mise en service (évitant un retour du produit en magasin et le mécontentement lié).

Selon un mode de réalisation, un témoin lumineux correspond à la connexion à un moniteur supplémentaire.

Selon un mode de réalisation, un témoin lumineux correspond à la connexion à l'alimentation.

Avantageusement, un témoin lumineux correspond à la polarité de la connexion à ladite platine de rue.

De préférence, un témoin lumineux correspond au branchement de la connexion à ladite platine de rue.

Selon une variante, ledit dispositif comporte des moyens de transmission vidéo.

Avantageusement, lesdits moyens de transmission vidéo permettent de transmettre de la vidéo en couleur.

### Brève description des dessins

On comprendra mieux l'invention à l'aide de la description, faite ci-après à titre purement explicatif, d'un mode de réalisation de l'invention, en référence aux Figures dans lesquelles :
- La Figure 1 illustre le dispositif selon la présente invention sous forme de kit ; et
- Les Figures 2A, 2B et 2C représentent le moniteur, respectivement vu de l'avant, de l'arrière et de côté ;
- La Figure 3 illustre le support ; et
- Les Figures 4A et 4B représentent la platine de rue.

### Description détaillée des modes de réalisation de l'invention

La présente invention se rapporte à un dispositif 10 de type interphone, comportant une platine 11 de rue placée à l'extérieur d'un domicile, un moniteur 12 placé à l'intérieur dudit domicile et un support 13 pour ledit moniteur 12, caractérisé en ce que ledit support 13 comporte une pluralité de témoins 14, 15, 16, 17 lumineux correspondant chacun à une panne particulière.

Dans un mode de réalisation, un témoin 14 lumineux correspond à la connexion à un moniteur 18 supplémentaire.

Dans un mode de réalisation, un témoin 15 lumineux correspond à la connexion à l'alimentation.

Dans un mode de réalisation, un témoin 16 lumineux correspond à la polarité de la connexion à ladite platine 11 de rue.

Dans un mode de réalisation, un témoin 17 lumineux correspond au branchement de la connexion à ladite platine 11 de rue.

Dans un mode de réalisation, ledit dispositif 10 comporte des moyens de transmission vidéo.

Dans un mode de réalisation, lesdits moyens de transmission vidéo permettent de transmettre de la vidéo en couleur.

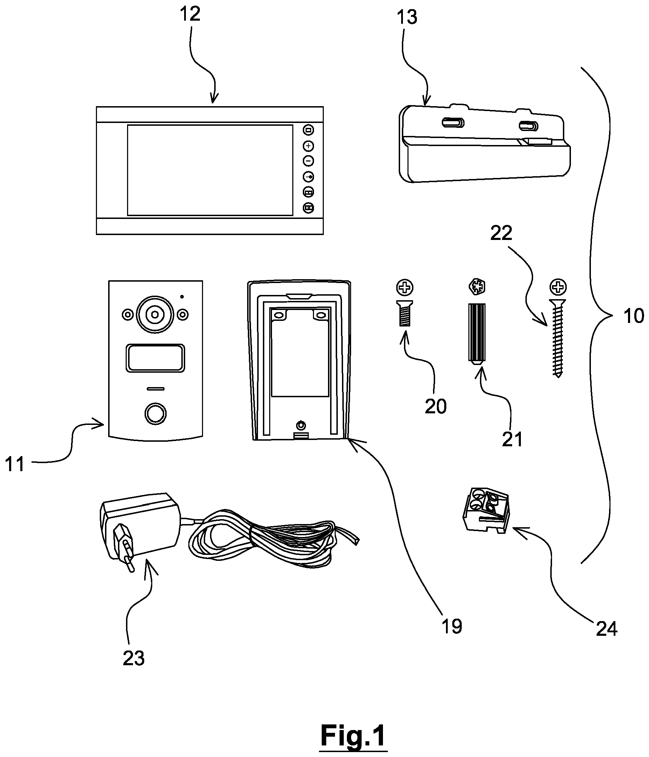

La Figure 1 illustre le dispositif 10 selon la présente invention sous forme de kit.

On observe sur la Figure 1 le dispositif 10 selon la présente invention sous forme de kit, qui comporte :
- un moniteur 12 ;
- un support 13 ;
- une platine 11 de rue ;
- une plaque 19 de fixation murale de ladite platine 11 de rue ;
- une vis 20 pour le verrouillage de ladite platine 11 de rue sur ladite plaque 19 de fixation murale ;
- des chevilles 21 pour la fixation de ladite platine 11 de rue, du moniteur 12 et du support 13 ;
- des vis 22 pour la fixation de ladite platine 11 de rue, du moniteur 12 et du support 13 ;
- un adaptateur 23 secteur, par exemple 15Vdc 1A, pour l'alimentation dudit moniteur 12 ; et
- des borniers 24 de connexion.

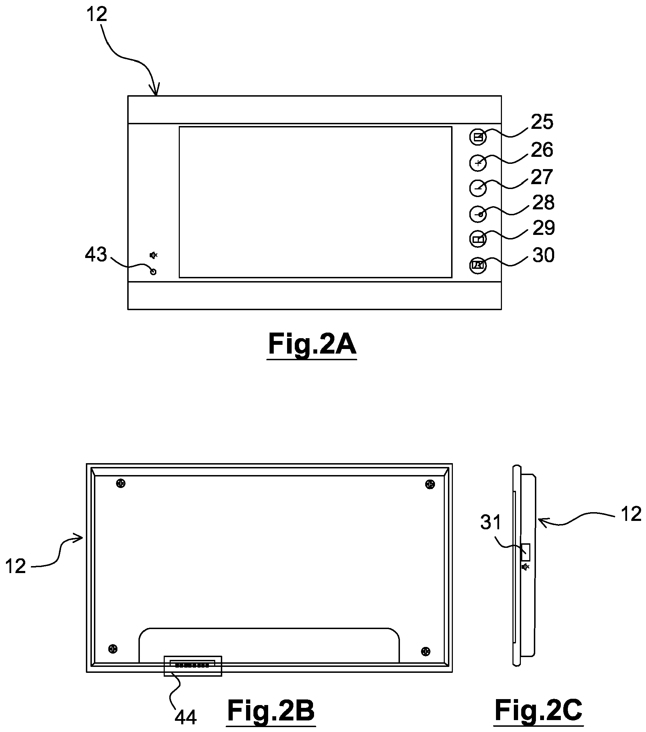

Les Figures 2A, 2B et 2C représentent le moniteur 12, respectivement vu de l'avant, de l'arrière et de côté.

On observe sur la Figure 2A le moniteur 12 vu de l'avant. Dans un mode de réalisation, ledit moniteur 12 comporte un microphone 43, une touche 25 « Menu », une touche 26 « + / sonnerie », une touche 27 « - / réglage du volume », une touche 28 de commande gâche électrique, une touche 29 de commande portail et une touche 30 de prise de communication.

On observe sur la Figure 2B le moniteur 12 vu de l'arrière. Dans un mode de réalisation, ledit moniteur 12 comporte un bornier 44 de connexion pour ledit support 13.

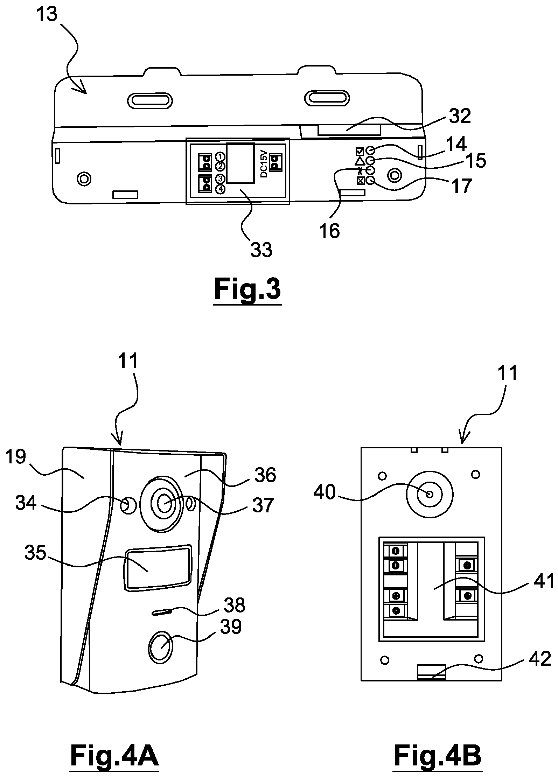

On observe sur la Figure 3C le moniteur 12 vu de côté. Dans un mode de réalisation, ledit moniteur 12 comporte une touche sourdine 31.

La Figure 3 illustre le support 13.

On observe sur la Figure 3 le support 13, qui comporte, dans un mode de réalisation, un bornier 32 de connexion moniteur, des borniers 33 de connexion, un témoin 14 lumineux correspond à la connexion à un moniteur 18 supplémentaire (non représenté) (Rouge = erreur de connexion et Bleu = Connexion OK ou moniteur absent), un témoin 15 lumineux correspond à la connexion à l'alimentation (Rouge = Alimentation > 16 V et Bleu = Alimentation < 16 V OK), un témoin 16 lumineux correspond à la polarité de la connexion à ladite platine 11 de rue (Rouge = Inversion de polarité et Bleu = Câblage OK) et un témoin 17 lumineux correspond au branchement de la connexion à ladite platine 11 de rue (Rouge = Fils débranchés ou coupés, et Bleu = Connexion OK).

Les Figures 4A et 4B représentent la platine 11 de rue.

On observe sur la Figure 4A ladite platine 11 de rue vue de l'avant. Cette platine 11 de rue est associée à une plaque 19 de fixation murale de ladite platine 11 de rue, et comporte, dans un mode de réalisation, une LED 34 infrarouge, un porte nom 35, un microphone 36, un objectif 37 d'une caméra, un haut-parleur 38 et un bouton d'appel 39.

On observe sur la Figure 4B ladite platine 11 de rue vue de l'arrière. Cette platine 11 de rue comporte, dans un mode de réalisation, une vis 40 de réglage de l'orientation de la caméra, un bornier 41 de connexion et des moyens 42 de verrouillage de ladite platine 11 de rue sur ladite plaque 19 de fixation.

Ainsi, grâce à la présente invention, il est possible de faire fonctionner le dispositif de manière efficace lors d'une installation, ceci sans occasionner de dommages audit dispositif. Grâce au dispositif selon la présente invention, une erreur de connexion est signalée à l'installateur, de manière à ce qu'il puisse résoudre le problème simplement et de manière efficace.

Le dispositif selon la présente invention permet de simplifier l'installation de l'interphone pour la personne qui installe le matériel : toute omission/erreur de câblage est signalée par le biais de témoins en façade du support pour aiguiller l'installateur. Une fois l'installation et le câblage diagnostiqués comme corrects, l'installateur n'a plus qu'à poser le moniteur dans le support pour pouvoir installer son interphone.

La présente invention permet également de protéger le matériel : les erreurs ou omissions signalées ne sont pas destructives pour le matériel. La technologie utilisée autorise les erreurs et empêche tout dommage irrémédiable du produit lors de sa mise en service (évitant un retour du produit en magasin et le mécontentement lié).

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif (10) de type interphone, comportant une platine (11) de rue placée à l'extérieur d'un domicile, un moniteur (12) placé à l'intérieur dudit domicile et un support (13) pour ledit moniteur (12), **caractérisé en ce que** ledit support (13) comporte une pluralité de témoins (14, 15, 16, 17) lumineux correspondant chacun à une panne particulière.

2. Dispositif (10) selon la revendication 1, **caractérisé en ce qu'**un témoin (14) lumineux correspond à la connexion à un moniteur (18) supplémentaire.

3. Dispositif (10) selon la revendication 1 ou la revendication 2, **caractérisé en ce qu'**un témoin (15) lumineux correspond à la connexion à l'alimentation.

4. Dispositif (10) selon la revendication 1, 2 ou 3, **caractérisé en ce qu'**un témoin (15) lumineux correspond à la polarité de la connexion à ladite platine (11) de rue.

5. Dispositif (10) selon l'une des revendications précédentes, **caractérisé en ce qu'**un témoin (17) lumineux correspond au branchement de la connexion à ladite platine (11) de rue.

6. Dispositif (10) selon l'une des revendications précédentes, **caractérisé en ce qu'**il comporte des moyens de transmission vidéo.

7. Dispositif (10) selon la revendication 6, **caractérisé en ce que** lesdits moyens de transmission vidéo permettent de transmettre de la vidéo en couleur.
